# EUROPEAN PATENT APPLICATION

(11) **EP 0 655 550 A1**
(43) Date of publication of application: **31.05.1995**
(21) Application number: 94118046.5
(22) Date of filing: 15.11.1994
(51) Int. Cl.: F02B 37/00, F02B 29/04

(54) **Turbo-cooling engine**

(30) Priority: 26.11.1993 JP 319208/93
(71) Applicant: MITSUBISHI JUKOGYO KABUSHIKI KAISHA, Tokyo (JP)
(72) Inventor: Tosa, Youzou, c/o Nagasaki Res.Dev., Center of, 5-chome, Nagasaki-shi, Nagasaki-ken (JP); Ishida, Hiroyuki, c/o Nagasaki Res.Dev., Center of, 5-chome, Nagasaki-shi, Nagasaki-ken (JP)
(74) Representative: Henkel, Feiler, Hänzel & Partner

(57) **Abstract**

The engine includes an exhaust gas turbo supercharger (40), an air cooler (6) and an expansion turbine (9), wherein high-pressure air compressed by a compressor (5) in the supercharger (40) is brought to a low temperature in the expansion turbine ( 9) and then delivered to a cylinder (1) in the engine; A part of the air compressed by the compressor (5) in the scavenge turbo supercharger (40) and cooled by the air cooler (6) is led directly to a scavenge port (10), the remainder is converted to a low-temperature high-pressure supercharging air through a second-stage compressor (22), a third-stage compressor (7) and the expansion turbine (9), and this supercharging air is charged into the cylinder (1) through an air supply valve (2) provided in the cylinder (1) just after a scavenge-exhaust stroke to increase a filling amount.

## Description

### BACKGROUND OF THE INVENTION:

### 1. Field of the Invention:

The present invention relates to improvements in a turbo cooling engine, which is being put to practical use for the purpose of reducing nitrogen oxides in a scavenging gas, especially in a uniflow scavenging type 2-cycle diesel engine.

### 2. Description of the Prior Art:

In the art of diesel engines, especially of uniflow scavenging type 2-cycle diesel engines, for the purpose of reducing nitrogen oxides (NOx) in a scavenging gas, a turbo cooling engine, in which a high-pressure supercharging air compressed by a compressor in an exhaust gas turbo supercharger is brought to a low temperature through expansion with an expansion turbine and then it is supplied to the engine, is being put to practical use.

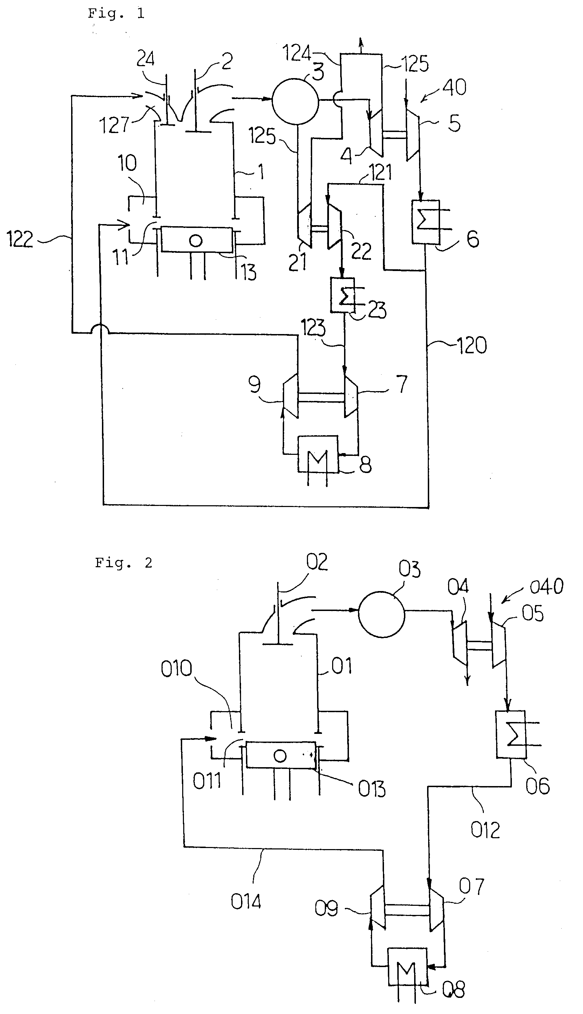

One example of a turbo cooling engine in the prior art is shown in Fig. 2. In this figure, reference numeral 01 designates a cylinder of the engine, numeral 02 designates an exhaust valve, numeral 03 designates an exhaust pipe, numeral 04 designates an exhaust gas turbine in an exhaust gas turbo supercharger 040 driven by an exhaust gas supplied through the exhaust pipe 03, numeral 05 designates a compressor rotationally driven by the exhaust gas turbine 04, numeral 06 designates an air cooler for cooling a pressurized air compressed by the compressor 05, numeral 013 designates a piston of the engine, numeral 010 designates a scavenging chamber of the engine, and numeral 011 designates scavenging ports drilled in the wall of the cylinder 01 at equal intervals along the circumferential direction.

Reference numeral 07 designates a second-stage compressor for further compressing the air fed from the air cooler 06 through an air passageway 012, numeral 08 designates a second air cooler for cooling the air compressed by the compressor 07, numeral 09 designates an expansion turbine for bringing the high-pressure air cooled by the second air cooler 08 to a low temperature through expansion and also rotationally driving the second-stage compressor 07, and numeral 014 designates an air passageway for supplying the low-temperature air delivered from the expansion turbine 09 to the scavenging chamber.

In the above-described turbo cooling engine, the air pressurized by the compressor 05 and cooled in the air cooler 06 is pressurized to a further high pressure by the second-stage compressor 07, and after it has been cooled in the second air cooler 08, it is brought to a low temperature through expansion in the expansion turbine 09, and then it is supplied into the cylinder 01 through the scavenging chamber 010 and the scavenging ports 011 to be used for combustion.

Thereby an engine combustion cycle temperature within the cylinder 01 is lowered, hence production of NOx is suppressed, and thus NOx in the exhaust gas can be reduced.

In the above-described turbo cooling engine in the prior art, during the scavenge-exhaust period when the scavenging ports 011 and the exhaust valve 02 are simultaneously opened, replacement of an exhaust gas existing within the cylinder 01 by a supercharging air having blown in through the scavenging ports 011 is effected, and at this time, most of the low-temperature supercharging air produced in the expansion turbine 09 would pass through the cylinder 01 without stagnating therein and would be exhausted.

Consequently, there exists a problem that the exhaust energy serving as driving energy for the compressors 05 and 07 would become short, hence it becomes impossible to produce a supercharging air at an appropriate temperature in a sufficient amount, and also a scavenge-exhaust performance of an engine is deteriorated, resulting in lowering of an output power of the engine and degradation of a fuel expense (a fuel consumption rate).

### SUMMARY OF THE INVENTION:

It is therefore one object of the present invention to provide an improved turbo cooling engine, in which exhaust gas energy is increased to produce a sufficient amount of low-temperature supercharging air by reducing the amount of low-temperature supercharging air blowing through a cylinder and thereby reduction of NOx in an exhaust gas and improvements in a scavenge-exhaust performance can be achieved.

The present invention has been worked out in order to achieve the above-mentioned object, and according to one feature of the present invention, there is provided a turbo cooling engine comprising an exhaust gas turbine (4) driven by an exhaust gas of the engine, a compressor (5) rotationally driven by this exhaust gas turbine (4) for compressing air, an air cooler (6) for cooling air delivered from this compressor (5), an air passageway (120) for directly connecting an outlet of this air cooler (6) with a scavenge chamber (10) of the above-mentioned engine, a second-stage compressor (22) for compressing a supercharging air branched from this air passageway (120), a second exhaust gas turbine (21) driven by the exhaust gas of the engine for rotationally driving this second-stage compressor (22), a third-stage compressor (7) for further compressing the supercharging air pressurized by the above-mentioned second-stage compressor (22), an expansion turbine (9) for bringing air delivered from this third-stage compressor (7) to a low temperature through expansion and also rotationally driving the above-mentioned third-stage compressor (7), an air passageway (122) for feeding air having passed this expansion turbine (9) into a cylinder (1), and an air supply valve (24) for controllably opening and closing an air supply port (127) connected to this air passageway (122).

According to another feature of the present invention, there is provided the above-featured turbo cooling engine, wherein the above-mentioned air supply valve (24) is opened just after finishment of a scavenge-exhaust stroke in the cylinder (1).

According to the present invention particularly specified in appended Claim 1, a part of the supercharging air compressed by the compressor (5) and cooled by the air cooler (6) is directly led into a scavenging chamber (10) of the engine through the air passageway (120). The remainder is further pressurized to a high pressure by the second-stage compressor (22) rotationally driven by the second exhaust gas turbine (21) and by the third-stage compressor (7), thereafter it becomes a low temperature through expansion in the expansion turbine (9), and it is supplied into the cylinder (1) at an appropriate timing from the air supply valve (24) through the air supply port (127).

Moreover, according to the present invention specified in appended Claim 2, since the low-temperature high-pressure air having passed the second-stage compressor (22), the second-stage exhaust gas turbine (21), the third-stage compressor (7) and the expansion turbine (9) for bringing the air delivered from the third-stage compressor (7) to a low temperature through expansion and also driving the third-stage compressor (7), is supplied into the cylinder through the air supply valve (24) which is opened after finishment of the scavenge-exhaust stroke in the cylinder (1), the low-temperature high-pressure air would not blow through the cylinder (1) to the side of the exhaust valve, but would be filled within the cylinder to be used for combustion.

The above-mentioned and other objects, features and advantages of the present invention will become more apparent by reference to the following description of one preferred embodiment of the present invention taken in conjunction with the accompanying drawings.

### BRIEF DESCRIPTION OF THE DRAWINGS:

In the accompanying drawings:
Fig. 1 is a system diagram of a turbo cooling engine according to one preferred embodiment of the present invention; and
Fig. 2 is a system diagram of a turbo cooling engine in the prior art.

### DESCRIPTION OF THE PREFERRED EMBODIMENT:

One preferred embodiment of the present invention is illustrated in Fig. 1. In this figure, reference numeral 1 designates a cylinder of an engine, numeral 2 designates an exhaust valve, numeral 3 designates an exhaust pipe, numeral 4 designates an exhaust gas turbine of an exhaust gas turbo supercharger 40, numeral 5 designates a compressor rotationally driven by the exhaust gas turbine 4, numeral 6 designates an air cooler for cooling a pressurized air delivered from the compressor 5, numeral 13 designates a piston of the engine, numeral 10 designates a scavenging chamber of the engine, and numeral 11 designates scavenging ports drilled in the wall of the cylinder 1 many at equal intervals along the circumferential direction.

Reference numeral 120 designates an air passageway for directly connecting an outlet of the air cooler 6 with the scavenging chamber 10. Reference numeral 21 designates a second exhaust gas turbine driven by an exhaust gas led from the exhaust pipe 3 through an exhaust gas passageway 125, and numeral 22 designates a second-stage compressor driven by the second exhaust gas turbine 21. This second-stage compressor 22 pressurizes the air led through a branch air passageway 121 branched from the air passageway 120.

Reference numeral 23 designates a second air cooler for cooling the air pressurized by the second-stage compressor 22, numeral 7 designates a third-stage compressor for further pressurizing the air led from the air cooler 23 through an air passageway 123, numeral 8 designates a third air cooler for cooling a high-pressure air delivered from the compressor 7, and numeral 9 designates an expansion turbine, which brings the high-pressure air cooled in the third air cooler 8 to a low temperature through expansion and also drives the third-stage compressor 7 by the expansion work.

At the top of the cylinder 1 opens an air supply port 127, which is connected to the expansion turbine 9 through an air passageway 122. Reference numeral 24 designates an air supply valve for controllably opening and closing the air supply port 127, and this valve is controlled by an opening/closing controller not shown so as to be opened just after finishment of a scavenge-exhaust stroke in the cylinder 1 (just after both the exhaust valve 2 and the scavenging ports 11 have closed). Reference numerals 124 and 125 designate exhaust pipes of exhaust gases discharged from the second exhaust gas turbine 21 and the exhaust gas turbine 4, respectively.

Upon operation of the above-described turbo cooling engine, after the air pressurized by the compressor 5 rotationally driven by the exhaust gas turbine 4 in the exhaust gas turbo supercharger 40 has been cooled by the air cooler 6, a part of the pressurized air is directly led into the scavenging chamber 10 through the air passageway 120, the remainder enters in the second-stage compressor 22 through the branch air passageway 121 branched from the air passageway 120, and it is pressurized to a further high pressure in this compressor 22.

After this high-pressure air has been cooled by the second air cooler 23, it is pressurized to a further high pressure by the third-stage compressor 7, thereafter it is cooled by the third air cooler 8 and is led to the expansion turbine 9. In the expansion turbine 9, the high-pressure air is brought to a low temperature through expansion, and also it rotationally drives the third-stage compressor 7 by this expansion work.

The high-pressure air brought to a low temperature in the expansion turbine 9 is led to the air supply port 127 through the air passageway 122, and when the air supply valve 24 is opened by the valve opening/closing controller just after finishment of the scavenge-exhaust stroke, it is led into the cylinder 1 through the air supply valve 24.

Since this supercharging air at a low temperature and at a high pressure is supplied into the cylinder 1 just after both the exhaust valve 2 and the scavenging ports 11 have closed, the supercharging air would not blow through to the side of the exhaust valve 2, but it can be entirely filled within the cylinder 1 to be used for combustion.

Accordingly, the inside of the cylinder 1 would be filled with a combustion air at a low temperature, hence a combustion cycle temperature becomes a low level, resulting in reduction of NOx in the exhaust gas, and also as a result of the fact that air pressurized to a high pressure is sufficiently filled within the cylinder, lowering of an output power as well as degradation of a fuel expense of an engine can be prevented.

As will be seen from the detailed description of one preferred embodiment of the present invention above, according to the present invention, owing to the provision such that a part of a supercharging air pressurized by an exhaust gas turbo supercharger end sent to a scavenging chamber of an engine is further pressurized to a high pressure by a second-stage compressor and is brought to a low temperature in an expansion turbine by being subjected to an expansion work and then this supercharging air at a high pressure and at a low temperature is supplied into a cylinder through an air supply valve, a low-temperature air is filled within a cylinder to be used for combustion, thus cooling of a combustion air can be achieved without deteriorating a scavenge-exhaust performance, and production of NOx in an exhaust gas can be reduced. Thereby, lowering of an output power and degradation of a fuel consumption can be prevented, and a turbo cooling engine having NOx in an exhaust gas reduced can be provided.

While a principle of the present invention has been described above in connection to one preferred embodiment of the present invention, it is intended that all matter contained in the above description and illustrated in the accompanying drawings shall be interpreted to be illustrative and not in a limiting sense.

## Claims

1. A turbo cooling engine characterized in that said engine comprises an exhaust gas turbine (4) driven by an exhaust gas of the engine, a compressor (5) rotationally driven by this exhaust gas turbine (4) for compressing air, an air cooler (6) for cooling air delivered from this compressor (5), an air passageway (120) for directly connecting an outlet of this air cooler (6) with a scavenge chamber (10) of said engine, a second-stage compressor (22) for compressing a supercharging air branched from this air passageway (120), a second exhaust gas turbine (21) driven by the exhaust gas of the engine for rotationally driving this second-stage compressor (22), a third-stage compressor (7) for further compressing the supercharging air pressurized by said second-stage compressor (22), an expansion turbine (9) for bringing air delivered from this third-stage compressor (7) to a low temperature through expansion and also rotationally driving said third-stage compressor (7), an air passageway (122) for feeding air having passed this expansion turbine (9) into a cylinder (1), and an air supply valve (24) for controllably opening and closing an air supply port (127) connected to this air passageway (122).

2. A turbo cooling engine as claimed in Claim 1, characterized in that said air supply valve (24) is opened just after finishment of a scavenge-exhaust stroke in the cylinder (1).
